Europäisches Patentamt

European Patent Office

Office européen des brevets

(11) Veröffentlichungsnummer: **0 108 397**

**A1**

(12) **EUROPÄISCHE PATENTANMELDUNG**

(21) Anmeldenummer: **83110981.4**

(22) Anmeldetag: **03.11.83**

(51) Int. Cl.³: **B 60 T 11/34**

(30) Priorität: **04.11.82 DE 3240752**

(43) Veröffentlichungstag der Anmeldung:
**16.05.84 Patentblatt 84/20**

(84) Benannte Vertragsstaaten:
**DE FR GB IT**

(71) Anmelder: **LUCAS INDUSTRIES public limited company**
**Great King Street**
**Birmingham, B19 2XF(GB)**

(72) Erfinder: **Gilles, Leo**
**Pfarrer-Wilmerstaedt-Strasse 4**
**D-5400 Koblenz(DE)**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) Druckabhängiges Ventil für eine hydraulische Fahrzeugbremsanlage.

(57) Zwei Ventilglieder (46,48), von denen eines (46) an einem Steuerzylinder (12) abstützbar und das andere (48) mit einem Steuerkolben (40) verbunden ist, trennen gemeinsam innerhalb des Steuerzylinders (12) eine Enlaßkammer (14) von einer Auslaßkammer (18), wenn der Steuerkolben (40) aus einer Offenstellung in eine Schließstellung bewegt wird. Eine Feder (62) hält mit einer Vorspannung den Steuerkolben (40) entgegen dem Druck in der Auslaßkammer (18) in der Offenstellung, bis dieser Druck einem festgelegten Schaltdruck überschreitet. Die Vorspannung der Feder (62) und somit der Schaltdruck läßt sich mit einstellen. Die Federabstützung (56) ist mit dem Steuerkolben (40) verschraubt; infolgedessen hat das Ventil keinen wesentlich größeren Platzbedarf als ein vergleichbares, nicht einstellbares Ventil.

FIG.1

PATENTANWALTE

WUESTHOFF - v. PECHMANN - BEHRENS - GOETZ

EUROPEAN PATENT ATTORNEYS

LR.-ING. FRANZ UESTHOFF (1927-1956)
L R. PHIL. FREJA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070

Lucas Industries

## Druckabhängiges Ventil für eine hydraulische Fahrzeugbremsanlage

Die Erfindung betrifft ein druckabhängiges Ventil für eine hydraulische Fahrzeugbremsanlage mit

- einem Steuerzylinder, in dem ein Steuerkolben geführt ist,
- zwei Ventilgliedern, von denen eines am Steuerzylinder abstützbar und das andere mit dem Steuerkolben verbunden ist, und die gemeinsam innerhalb des Steuerzylinders eine Einlaßkammer von einer Auslaßkammer trennen, wenn der Steuerkolben aus einer Offenstellung in eine Schließstellung bewegt wird,
- einer Feder, die mit einer Vorspannung den Steuerkolben entgegen dem Druck in der Auslaßkammer in der Offenstellung hält, bis dieser Druck einen festgelegten Schaltdruck überschreitet,
- und einer schraubbaren Federabstützung, mit der sich die Vorspannung der Feder und somit der Schaltdruck einstellen läßt.

Ventile dieser Gattung können entweder als Druckbegrenzungsventile oder als Druckminderventile ausgebildet sein. Sie werden üblicherweise in einem Bremskreis zwischen einem Hauptbremszylinder und einem oder mehreren Hinterradbremszylindern angeordnet, um ein Überbremsen der Hinterräder zu vermeiden, indem sie bei Überschreitung eines bestimmten Schaltdruckes im Hauptbremszylinder und in an diesen unmittelbar angeschlossenen Vorderradbremszylindern einen weiteren Druckanstieg in den Hinterradbremszylindern verhindern oder nur noch in einem bestimmten, verminderten Verhältnis zum Druckanstieg in den Vorderradbremszylindern zulassen.

Bei einem bekannten, als Druckbegrenzungsventil ausgebildeten Ventil der eingangs beschriebenen Gattung (Ate Bremsen-Handbuch, 4.Aufl.1975, Bartsch-Verlag, Ottobrunn b.München, S.146, Fig.6) ist die Feder in einem rohrförmigen Federgehäuse angeordnet, das in den Steuerzylinder eingeschraubt ist und als Federabstützung einen Gewindestopfen enthält. Die Feder stützt sich mit ihrem in bezug auf den Steuerzylinder äußeren Ende an diesem Gewindestopfen ab und mit ihrem entgegengesetzten Ende an einer Scheibe, die an einem Ende des Steuerkolbens sowie in dessen Offenstellung an einer Ringschulter des Steuerzylinders anliegt. Ein anderers bekanntes gattungsgemäßes Ventil (Teves-Handbuch, S.146, Fig.7), das als Druckminderventil ausgebildet ist, hat ein topfförmiges Federgehäuse, das ebenfalls am Steuerzylinder befestigt ist und an seinem von diesem entfernten Ende eine gegen Drehen festgehaltene Mutter aufweist. In diese Mutter ist ein Gewindestift eingeschraubt, der über einen topfförmigen Einsatz gegen das äußere Ende der Feder drückt. Das innere Ende der Feder stützt sich über einen weiteren topfförmigen Einsatz am äußeren Ende des Steuerkolbens ab. Diesen beiden bekannten gattungsgemäßen Ventilen ist gemeinsam, daß die schraubbare Federabstützung die Gesamtlänge des Ventils merklich vergrößert. In beiden Fällen ist auch die Feder so angeordnet, daß sie den axialen Platzbedarf des Ventils im Verhältnis zum Platzbedarf des Steuerzylinders erheblich vergrößert.

Es ist zwar auch ein Druckminderventil bekannt (DE-PS 1 580 148), bei dem die Feder rings um einen stangenförmigen Abschnitt des Steuerkolbens angeordnet ist, der die Einlaßkammer durchsetzt und sich an deren von den Ventilgliedern abgewandtem Ende durch eine Dichtung hindurcherstreckt.
Die Feder ist einerseits an einer Ringschulter des Steuerkolbens abgestützt und andererseits an einem radial federnden
Ring, der in eine Ringnut im Inneren des Steuerzylinders
eingerastet ist, so daß die Vorspannung der Feder nicht einstellbar ist.

Der Erfindung liegt deshalb die Aufgabe zugrunde, ein druckabhängiges Ventil der eingangs beschriebenen Gattung derart
weiterzubilden, daß die schraubbare Federabstützung, mit der
sich die Vorspannung der Feder und somit der Schaltdruck
einstellen läßt, den Platzbedarf des Ventils im Vergleich
mit einem nicht einstellbaren Ventil zumindest nicht wesentlich erhöht.

Die Aufgabe ist erfindungsgemäß dadurch gelöst, daß die Federabstützung mit dem Steuerkolben verschraubt ist.

Durch die Erfindung wird der Bereich, in dem ein Gewinde der
schraubbaren Federabstützung mit einem komplementären Gewinde zusammenwirkt, innerhalb der Gesamtlänge des Steuerkolbens untergebracht, wodurch insgesamt an axialer Baulänge
gespart wird.

Die Federabstützung kann eine Schraube aufweisen, die in ein
Gewindeloch des Steuerkolbens eingeschraubt ist. Die Federabstützung kann aber auch wie das oben beschriebene bekannte
Druckminderventil eine gegen Drehen festgehaltene Mutter
aufweisen. Für diesen Fall ist erfindungsgemäß am Kolben ein
Außengewinde und ein Werkzeuganschluß für ein Schraubwerkzeug ausgebildet.

Diese Ausbildung ist vorallem von Vorteil in Verbindung mit
den weiteren Merkmalen des oben beschriebenen bekannten Druckminderventils, daß der Steuerkolben einen stangenförmigen Abschnitt aufweist, der die Einlaßkammer durchsetzt und sich an deren von den Ventilgliedern abgewandtem Ende durch eine Dichtung hindurcherstreckt. Unter diesen Vorausetzungen besteht eine besonders vorteilhafte Ausführungsform der Erfindung darin, daß die Federabstützung innerhalb der Einlaßkammer auf den stangenförmigen Abschnitt des Steuerkolbens aufgeschraubt ist, wobei in der Einlaßkammer, wie an sich aus der DE-PS 1 580 148 bekannt, auch die Feder angeordnet ist.

Die zuletzt beschriebene Ausführungsform ist zweckmäßigerweise dadurch weitergebildet, daß die Federabstützung mindestens einen achsparallelen Schlitz aufweist, in den ein im Steuerzylinder befestigtes Sicherungsglied eingreift. Dadurch wird verhindert, daß die Federabstützung sich, nachdem sie für einen bestimmten Schaltdruck eingestellt worden ist, in unbeabsichtigter Weise verdreht, beispielsweise dadurch, daß in der Feder beim Einstellen ein Drehmoment aufgebaut worden ist, das durch Reibung auf die Federabstützung übertragen wird.

Bei der zuletzt beschriebenen Ausführungsform ist das Sicherungsglied vorzugsweise eine Federhülse, die in einer zur Einlaßkammer führenden radialen Einlaßbohrung des Steuerzylinders steckt.

Der Steuerkolben selbst ist im allgemeinen durch eine oder mehrere mit ihm zusammenwirkende Dichtungen hinreichend gegen unbeabsichtigtes Drehen gesichert. Vorsorglich kann dem Steuerkolben jedoch eine gesonderte Verdrehsicherung zugeordnet sein, die jegliche unbeabsichtigte Drehung des Steuerkolbens im Steuerzylinder ausschließt. Solche Verdrehsicherungen sind in zahlreichen Ausführungsformen bekannt, weshalb sich eine nähere Beschreibung an dieser Stelle erübrigt.

Anstatt die Federabstützung und den Steuerkolben je für sich gegen unbeabsichtige Drehung in bezug auf den Steuerzylinder zu sichern, kann man auch die Verschraubung der Federabstützung mit dem Kolben unmittelbar sichern, beispielsweise mit einem gegen Bremsflüssigkeit beständigen Sicherungslack.

Ausführungsbeispiele der Erfindung werden im folgenden anhand schematischer Zeichnungen mit weiteren Einzelheiten beschrieben. Es zeigen jeweils in einem axialen Schnitt:

Fig.1 ein als selbständige Einheit gestaltetes erfindungsgemäßes Ventil,

Fig.2 eine zum Betätigen einer Trommelbremse vorgesehene hydraulische Betätigungsvorrichtung mit einem erfindungsgemäßen Ventil und

Fig.3 das Ventil gemäß Fig.2 in einer Einstellvorrichtung.

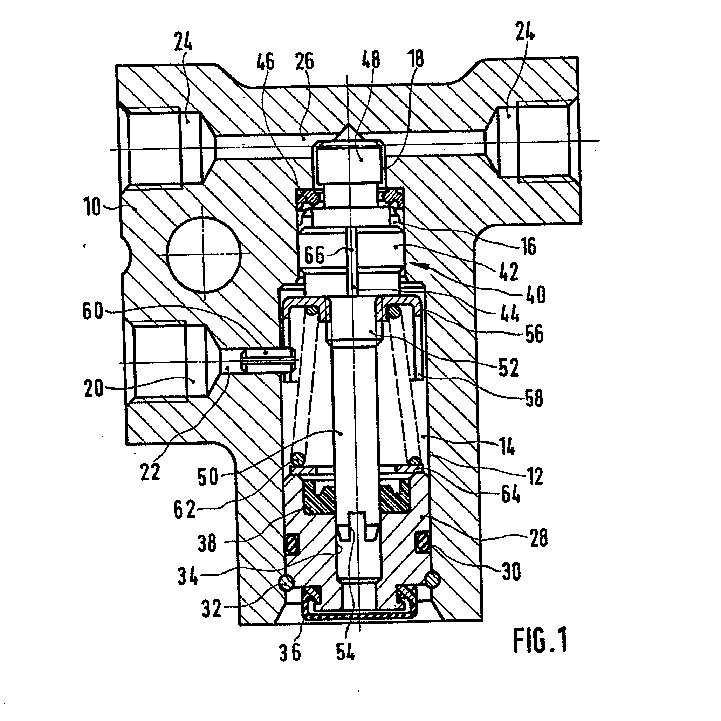

Das in Fig.1 dargestellte Ventil hat ein Ventilgehäuse 10, in dem ein Steuerzylinder 12 ausgebildet ist. Der Steuerzylinder 12 hat eine mehrstufige Bohrung; diese bildet eine Einlaßkammer 14 von verhältnismäßig großem Durchmesser, eine Zwischenkammer 16 von mittlerem Durchmesser und eine Auslaßkammer 18 von verhältnismäßig kleinem Durchmesser. Die Einlaßkammer 14 ist mit einem am Ventilgehäuse 10 ausgebildeten Hauptzylinderanschluß 20 durch eine radiale Einlaßbohrung 22 verbunden. Die Auslaßkammer 18 ist mit zwei ebenfalls am Ventilgehäuse 10 ausgebildeten Radzylinderanschlüssen 24 durch eine diametral angeordnete Auslaßbohrung 26 verbunden.

Die Einlaßkammer 14 ist an ihrem von der Zwischenkammer 16 abgewandten Ende durch einen Stopfen 28 begrenzt, der durch eine O-Ringdichtung 30 gegen den Steuerzylinder 12 abgedichtet und durch einen in den Steuerzylinder 12 eingerasteten Schnappring 32 daran gehindert ist, sich axial nach außen zu verschieben. Der Stopfen 28 hat eine zentrale Bohrung 34,
die außen durch eine elastische, wegnehmbare Schutzkappe 36
abgedeckt ist. Der Stopfen 28 weist ferner am axial inneren
Ende seiner zentralen Bohrung 34 eine Lippendichtung 38 auf.

Im Steuerzylinder 12 ist ein Steuerkolben 40 angeordnet, der
mit einem an ihm ausgebildeten Führungsabschnitt 42 von verhältnismäßig großem Durchmesser in der Zwischenkammer 16
verschiebbar geführt ist. Im Führungsabschnitt 42 ist wenigstens ein achsparalleler Längsschlitz 44 ausgebildet, der
die Einlaßkammer 14 mit dem an die Auslaßkammer 18 angrenzenden Teil der Zwischenkammer 16 verbindet. In die Zwischenkammer 16 ist eine ringförmiges Ventilglied 46 aus
einem Elastomer eingesetzt, das einem am Kopf des Steuerkolbens 40 ausgebildeten pilzförmigen Ventilglied 48 zugeordnet ist.

An der vom Ventilglied 48 abgewandten Seite des Steuerkolbens 40 ist ein stangenförmiger Abschnitt 50 von verhältnismäßig kleinem Durchmesser mit einem an den Führungsabschnitt 42 angrenzenden Außengewinde 52 ausgebildet. Der
stangenförmige Abschnitt 50 erstreckt sich im übrigen als
glatter Zylinder durch die Einlaßkammer 14 und die Lippendichtung 38 hindurch und weist an seinem äußeren Ende einen
Werkzeuganschluß 54 auf, der im dargestellten Beispiel von
einem einfachen Schlitz für einen Schraubendreher gebildet
ist.

Auf das Außengewinde 52 ist eine Federabstützung 56 aufgeschraubt, die im dargestellten Beispiel ein topfförmiges
Blechpreßteil ist und eine Anzahl in gleichen Winkelabständen angeordneter achsparalleler Schlitze 58 aufweist. In
einen dieser Schlitze 58 ragt ein Sicherungsglied 60 hinein,
das in der Einlaßbohrung 22 steckt und im dargestellten Beispiel von einer handelsüblichen Federhülse gebildet ist.

An der Federabstützung 56 ist das eine Ende einer Feder 62
abgestützt und zentriert, deren anderes Ende über eine Beilagscheibe 64 am Stopfen 28 abgestützt ist. Die Feder 62 hat
eine bestimmte Vorspannung, die sich - ausgehend von der abgebildeten Stellung der Federabstützung 56 - dadurch vergrößern läßt, daß man mit einem in den schlitzförmigen Werkzeuganschluß 54 eingesetzten Schraubendreher den Steuerkolben 40 dreht, und zwar im Uhrzeigersinn, wenn das Außengewinde 52 ein Rechtsgewinde ist. Durch solches Drehen des Steuerkolbens 40 entfernt sich die Federabstützung 56 vom Führungsabschnitt 42, da sie durch das Sicherungsglied 60 gehindert
ist, sich mit dem Steuerkolben 40 zu drehen; dadurch wird
die Feder 62 stärker zusammengedrückt.

Der Steuerkolben 40 ist in Fig.1 in seiner Offenstellung
abgebildet, die dadurch festgelegt ist, daß das Ventilglied
48 gegen das Ende der Auslaßkammer 18 stößt; dabei hat das
Ventilglied 48 einen Abstand vom Ventilglied 46, so daß eine
Drucksteigerung, die von einem nicht dargestellten Hauptbremszylinder ausgeht, über die Einlaßkammer 14 in gleicher
Größe in die Auslaßkammer 18 übertragen wird. Die dabei auf
den Steuerkolben 40 einwirkende resultierende Druckkraft ist
zunächst kleiner als die Kraft, die von der Vorspannung der
Feder 62 herrührt und bestrebt ist, den Steuerkolben 40 in
seiner Offenstellung zu halten.

Wenn jedoch der Druck in der Auslaßkammer 18 einen durch die
Vorspannung der Feder 62 vorbestimmten Schaltdruck überschreitet, überwindet die auf den Steuerkolben 40 einwirkende resultierende Druckkraft die Vorspannung, so daß der Steuerkolben 40 gegen den Widerstand der Feder 62 verschoben wird
- in der Zeichnung nach unten - bis das pilzförmige Ventilglied 48 am ringförmigen Ventilglied 46 anliegt und dadurch
die Auslaßkammer 18 von der Zwischenkammer 16 und somit auch
von der Einlaßkammer 14 getrennt wird.

Bei weiterem Druckanstieg in der Einlaßkammer 14 wird der Steuerkolben 40 vorübergehend wieder geöffnet, so daß der Druck auch in der Auslaßkammer 18 steigt, bis die auf den Steuerkolben 40 einwirkende resultierende Druckkraft die Feder 62 wieder überwindet. Dieses Spiel wiederholt sich bei weiterem Druckanstieg in der Einlaßkammer 14 mit der Folge, daß der Druck in der Auslaßkammer 18 in einem bestimmten, verminderten Verhältnis ebenfalls weiter steigt.

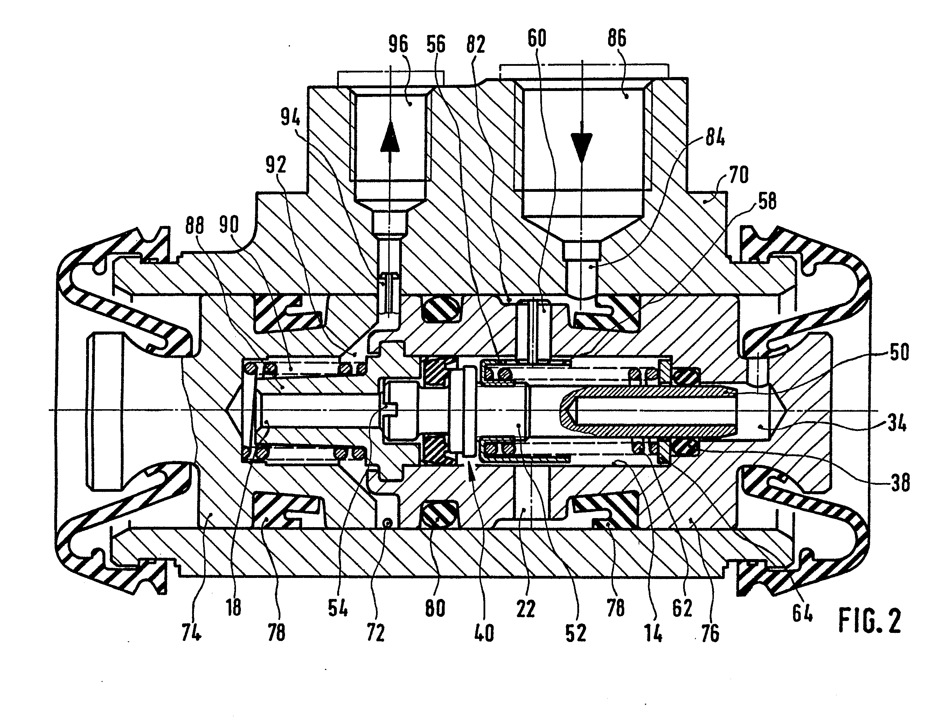

In Fig.2 ist ein doppeltwirkender Betätigungszylinder 70 dargestellt, der zum Einbau in eine Trommelbremse vorgesehen ist. Der Betätigungszylinder 70 hat eine glatte Bohrung 72, die im Einbauzustand zwischen einander gegenüberliegenden Enden zweier Bremsbacken liegt und zwei Betätigungskolben 74 und 76 enthält. Die beiden Betätigungskolben 74 und 76 tragen je eine Lippendichtung 78; der in Fig.2 rechte Betätigungskolben 76 trägt außerdem eine O-Ringdichtung, die zusammen mit der zugehörigen Lippendichtung 78 einen Ringraum 82 begrenzt. Dieser Ringraum 82 ist durch eine radiale Verbindungsbohrung 84 mit einem in den Betätigungszylinder 70 eingearbeiteten Hauptzylinderanschluß 86 verbunden.

Der Betätigungskolben 76 trägt ferner an seinem axial inneren Ende ein hohles Verlängerungsstück 88, das in den teilweise hohlgebohrten Betätigungskolben 74 hineinragt. Rings um das Verlängerungsstück 88 ist eine Rückstellfeder 90 angeordnet, die bestrebt ist, die beiden Betätigungskolben 74 und 76 voneinander weg zu drücken. Das Verlängerungsstück 88 ist so gestaltet, daß sein Innenraum ständig, auch in der abgebildeten innersten Stellung beider Betätigungskolben 74 und 76, mit einem Ringraum 92 verbunden ist, der zwischen diesen beiden Kolben innerhalb des Betätigungszylinders 70 ausgebildet und durch eine weitere Verbindungsbohrung 94 mit einem Radzylinderanschluß 96 verbunden ist.

Im Betätigungskolben 76 ist ein druckabhängiges Ventil angeordnet, das in wesentlichen Einzelheiten mit dem anhand
der Fig.1 beschriebenen Ventil übereinstimmt, weshalb in

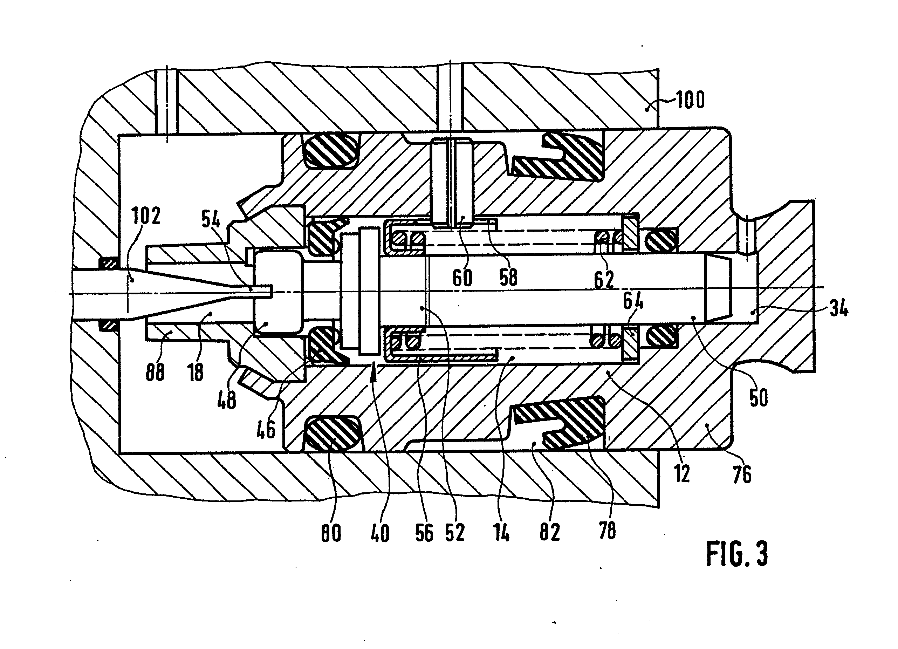

Fig.2 und 3 Teile, die in Fig.1 dargestellten Teilen entsprechen, mit gleichen Bezugsziffern bezeichnet sind. Ein
Unterschied besteht im wesentlichen darin, daß der in Fig.1
dargestellte Stopfen 28 bei dem Ventil gemäß Fig.2 und 3
fortgelassen ist und daß der Werkzeuganschluß 54 - wiederum
in Form eines einfachen Schlitzes - nicht am Ende des
schlanken, stangenförmigen Abschnitts 50 des Steuerkolbens
40 angeordnet ist, sondern an dessen Kopf, der auch hier
wieder ein Ventilglied 48 bildet.

Zum Einstellen der Vorspannung der Feder 62 ist gemäß Fig.3
eine Einstellvorrichtung vorgesehen, die ein Gehäuse 100 und
einen in diesem abdichtend geführten Schraubendreher 102
aufweist. Der Betätigungskolben 76 wird in das Gehäuse 100
eingeschoben und in diesem festgehalten, während in den
Ringräumen 82 und 92 ein Druck aufgebaut wird, der mit dem
gewünschten Schaltdruck übereinstimmt. Nun wird der Betätigungskolben 76 mit dem Schraubendreher 102 derart gedreht,
daß die Federabstützung 56 diejenige Stellung einnimmt, bei
der die Vorspannung in der Feder 62 mit der auf den Steuerkolben 40 einwirkenden resultierenden Druckkraft im Gleichgewicht steht.

5650

PATENTANWÄLTE

WUESTHOFF - v. PECHMANN - BEHRENS - GOETZ

EUROPEAN PATENT ATTORNEYS

DR.-ING FRANZ WUESTHOFF
DR. PHIL. FREDA WUFSTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 524 070

Lucas Industries

P a t e n t a n s p r ü c h e :

1. Druckabhängiges Ventil für eine hydraulische Fahrzeugbremsanlage mit

- einem Steuerzylinder (12), in dem ein Steuerkolben (40)
geführt ist,
- zwei Ventilgliedern (46,48), von denen eines (46) am
Steuerzylinder (12) abstützbar und das andere (48) mit dem
Steuerkolben (40) verbunden ist, und die gemeinsam innerhalb
des Steuerzylinders (12) eine Einlaßkammer (14) von einer
Auslaßkammer (18) trennen, wenn der Steuerkolben (40) aus
einer Offenstellung in eine Schließstellung bewegt wird,
- einer Feder (62), die mit einer Vorspannung den Steuerkolben (40) entgegen dem Druck in der Auslaßkammer (18) in
der Offenstellung hält, bis dieser Druck einen festgelegten
Schaltdruck überschreitet,
- und einer schraubbaren Federabstützung (56), mit der sich
die Vorspannung der Feder (62) und somit der Schaltdruck
einstellen läßt,
d a d u r c h   g e k e n n z e i c h n e t ,
daß die Federabstützung (56) mit dem Steuerkolben (40) verschraubt ist.

2. Ventil nach Anspruch 1, dessen Federabstützung (56) eine
am Steuerzylinder (12) gegen Drehen festgehaltene Mutter
aufweist,
dadurch gekennzeichnet,
daß am Steuerkolben (40) ein Außengewinde (52) und ein Werkzeuganschluß (54) für ein Schraubwerkzeug (102) ausgebildet
ist.

3. Ventil nach Anspruch 2, dessen Steuerkolben (40) einen
stangenförmigen Abschnitt (50) aufweist, der die Einlaßkammer (14) durchsetzt und sich an deren von den Ventilgliedern
(46,48) abgewandtem Ende durch eine Dichtung (38)
hindurcherstreckt,
dadurch gekennzeichnet,
daß die Federabstützung (56) innerhalb der Einlaßkammer (14)
auf den stangenförmigen Abschnitt (50) des Steuerkolbens
(14) aufgeschraubt ist, wobei in der Einlaßkammer (14) auch
die Feder (62) angeordnet ist.

4. Ventil nach Anspruch 2 oder 3,
dadurch gekennzeichnet,
daß die Federabstützung (56) mindestens einen achsparallelen
Schlitz (58) aufweist, in den ein im Steuerzylinder (12) befestigtes Sicherungsglied (60) eingreift.

5. Ventil nach Anspruch 4,
dadurch gekennzeichnet,
daß das Sicherungsglied (60) eine Federhülse ist, die in
einer zur Einlaßkammer (14) führenden radialen Einlaßbohrung
(22) des Steuerzylinders (12) steckt.

6. Ventil nach einem der Ansprüche 1 bis 5,
dadurch gekennzeichnet,
daß dem Steuerkolben (40) eine Verdrehsicherung (44,66) zugeordnet ist.

0108397

FIG.1

FIG. 2

0108397

FIG.3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | DE-B-1 580 148 (KELSEY-HAYES CO.) <br> * Insgesamt; Figur 2 * | 1-3 | B 60 T 11/34 |
| Y | FR-A-2 389 522 (KELSEY-HAYES CY.) <br> * Seite 11, Zeile 9 - Seite 14, Zeile 38; Figuren 10,11 * | 1-3 | |
| A | EP-A-0 046 659 (LUCAS INDUSTRIES) <br> * Insgesamt; Figuren 1-3 * | 1,4,5 | |
| A | DE-B-1 680 762 (ALFRED TEVES) | 1 | |
| A | DE-A-1 480 302 (ALFRED TEVES) | 1 | RECHERCHIERTE SACHGEBIETE (Int. Cl. ³) |
| A | US-A-3 653 721 (KLIMEK) | | B 60 T 11/00 <br> B 60 T 8/00 <br> G 05 D 16/00 |
| A | DE-A-2 457 057 (ALFRED TEVES) | | |
| A | GB-A- 911 096 (AUTOMOTIVE PRODUCTS CY.) | | |

Der vorliegende Recherchenbericht wurde für alle Patentansprüche erstellt.

| Recherchenort <br> DEN HAAG | Abschlußdatum der Recherche <br> 09-02-1984 | Prüfer <br> BRAEMS C.G.I. |
|---|---|---|

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82